(19) Europäisches Patentamt
European Patent Office
Office européen des brevets

(11) **EP 3 358 527 A1**

(12) **EUROPEAN PATENT APPLICATION**

(43) Date of publication:
**08.08.2018 Bulletin 2018/32**

(51) Int Cl.:
***G06T 13/40*** *(2011.01)*

(21) Application number: **18154921.3**

(22) Date of filing: **02.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **03.02.2017 US 201715424486**

(71) Applicant: **Sony Corporation Tokyo, 108-0075 (JP)**

(72) Inventors:
• **Ni, Jie**
  **San Diego, CA 92127 (US)**
• **Gharavi-Alkhansari, Mohammad**
  **San Diego, CA 92127 (US)**

(74) Representative: **D Young & Co LLP**
  **120 Holborn**
  **London EC1N 2DY (GB)**

(54) **APPARATUS AND METHOD TO GENERATE REALISTIC RIGGED THREE DIMENSIONAL (3D) MODEL ANIMATION FOR VIEW-POINT TRANSFORM**

(57)    An apparatus and method to generate a realistic rigged three-dimensional (3D) model animation for view-point transform, includes storage of a first 3D model, which further includes a first hierarchal set of interconnected bones defined in a first set of bone orientations. Bone structure information of a second hierarchal set of interconnected bones of an object is received from a motion-sensing device. The first set of bone orientations is modified to a second set of bone orientations based on the bone structure information. A second 3D model is generated by transformation of a size of one or more bones in the first hierarchal set of interconnected bones based on the bone structure information. The second 3D model is animated on a display device in accordance with the second set of bone orientations and the transformed first hierarchal set of interconnected bones.

FIG. 1

EP 3 358 527 A1

## Description

Various embodiments of the disclosure relate to three-dimensional (3D) modeling and animation. More specifically, various embodiments of the disclosure relate to an apparatus and method to generate realistic rigged 3D model animation for view-point transform.

Advancements in the field of three-dimensional (3D) computer graphics, modeling, and animation have provided the ability to animate 3D models and visualize real objects in a 3D computer graphics environment. 3D content, such as 3D character models, are increasingly used in animated movies, games, and virtual-reality systems to enhance user experience. A 3D model is a static 3D mesh that resembles the shape of a particular object. Typically, such a 3D model is manually designed by computer graphics artists, commonly known as modelers, by use of a modeling software application. Such a 3D model may not be used in the same way in animation. Other 3D computer graphics specialists, commonly known as riggers, manually introduce a support structure, such as a digital rig, to the static 3D mesh, to produce a rigged 3D model. A digital rig in a rigged 3D model acts as a skeleton and includes a hierarchical set of interconnected bones, which may include a system of joints and bones. This allows to define motions for animation in the rigged 3D model. There are several complexities involved in viewing animated rigged 3D model of an object from a plurality of view-points other than the object view-point in which a pose of the object is captured. Further, the rigged 3D model that is animated may not resemble the anatomical skeletal structure of the object. For instance, structure and the relative size of the interconnected bones of the digital rig of the animated rigged 3D models may not be specific to the structure of the objects whose pose is captured. This discrepancy in the structure and size of the interconnected bones of the digital rig of the rigged 3D models may not be desirable for realistic animation.

Further limitations and disadvantages of conventional and traditional approaches will become apparent to one of skill in the art, through comparison of described systems with some aspects of the present disclosure, as set forth in the remainder of the present application and with reference to the drawings.

An apparatus and method to generate realistic rigged three-dimensional (3D) model animation for view-point transform is provided substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1 is a block diagram that illustrates an exemplary network environment to generate realistic animation for view-point transform, in accordance with an embodiment of the disclosure.

FIG. 2 is a block diagram that illustrates an exemplary electronic device, in accordance with an embodiment of the disclosure.

FIGs. 3A, 3B, 3C, and 3D, collectively, illustrate an example of generation of a second 3D model from a first 3D model, in accordance with an embodiment of the disclosure.

FIG. 4 illustrates a first exemplary scenario for implementation of the disclosed apparatus and method for generation of realistic rigged 3D model animation for view-point transform, in accordance with an embodiment of the disclosure.

FIG. 5 is a second exemplary scenario for implementation of the disclosed apparatus and method for generation of realistic rigged 3D model animation for view- point transform, in accordance with an embodiment of the disclosure.

FIG. 6 is a third exemplary scenario for implementation of the disclosed apparatus and method for generation of realistic rigged 3D model animation for view- point transform, in accordance with an embodiment of the disclosure.

FIG. 7 is a fourth exemplary scenario for implementation of the disclosed apparatus and method for generation of multiple realistic rigged 3D model animations for view-point transform, in accordance with an embodiment of the disclosure.

FIG. 8 is a flowchart that illustrates exemplary operations to generate realistic rigged 3D model animation for view-point transform, in accordance with an embodiment of the disclosure.

The following described implementations may be found in the disclosed apparatus and method to generate realistic rigged three-dimensional (3D) model animation. Exemplary aspects of the disclosure may include an apparatus that may be communicatively coupled to a motion-sensing device and a display device. The apparatus may include a memory device configured to store a first 3D model. The first 3D model may include a first hierarchal set of interconnected bones defined in a first set of bone orientations. The first 3D model may correspond to a rigged 3D model. Further, the first hierarchal set of interconnected bones in the first 3D model may correspond to a digital rig in the rigged 3D model. The apparatus may be configured to receive bone structure information of a second hierarchal set of interconnected bones of an object from the motion-sensing device, via a communication channel. The object may correspond to a human, an animal, or a robot that mimics natural body movements of a real human or animal. The apparatus may be configured to modify the first set of bone orientations of the first hierarchal set of interconnected bones of the first 3D model to a second set of bone orientations. The apparatus may modify the first set of bone orientations to the second set of bone orientations, based on the received bone structure information from the motion-sensing device. The apparatus may be configured to generate a second 3D model by transformation of a size of one or more bones in the first hierarchal set of interconnected bones in the first 3D model. The apparatus may transform the size of one or more bones in the first hierarchal set of interconnected bones, based on the received bone structure information. The apparatus may be configured to animate the generated second 3D model on the display device in accordance with the second set of bone orientations and the transformed first hierarchal set of interconnected bones.

In accordance with an embodiment, the first hierarchal set of interconnected bones of the first 3D model may comprise one or more root bones, one or more non-root bones, and one or more end bones. The apparatus may be further configured to compute the relative bone orientation of a single root bone in the first hierarchal set of interconnected bones, with respect to a corresponding root bone in the second hierarchal set of interconnected bones. The relative bone orientation of the root bone in the first hierarchal set of interconnected bones may be computed based on the bone structure information of the corresponding root bone.

The apparatus may be further configured to compute the relative bone orientation of a non-root bone in the first hierarchal set of interconnected bones, with respect to a corresponding non-root bone in the second hierarchal set of interconnected bones. The relative bone orientation of the non-root bone may be computed based on the bone structure information of a corresponding non-root bone and a corresponding parent bone of a parent bone of the non-root bone in the first hierarchal set of interconnected bones.

The apparatus may be further configured to compute relative bone orientation of an end bone in the first hierarchal set of interconnected bones, with respect to a corresponding end bone in the second hierarchal set of interconnected bones. The relative bone orientation of the end bone may be computed based on a joint position of the end bone in the first hierarchal set of interconnected bones in the first 3D model.

The apparatus may be further configured to determine a set of constraints for movement of the first hierarchal set of interconnected bones of the first 3D model, to stabilize the second set of bone orientations. The bone structure information may be received in real time, near-real time, or a lag time from the motion-sensing device. The bone structure information may comprise bone orientation information and size information of the second hierarchal set of interconnected bones of the object. This information may be associated with a view point of the object.

In accordance with an exemplary aspect of the disclosure, the apparatus may be configured to receive the bone structure information of a plurality of objects from the motion-sensing device. The bone structure information of the plurality of objects may be received from the motion-sensing device in real time, near-real time, or a lag time. The apparatus may generate a plurality of second 3D models, based on the first 3D model and the received bone structure information of the plurality of objects from the motion-sensing device.

The first 3D model may further include surface representation, such as a mesh structure, of one or more portions of the first 3D model. The apparatus may be configured to deform the surface representation of the one or more portions of the first 3D model, based on the second set of orientations and the transformed first hierarchal set of interconnected bones. The apparatus may be configured to synchronize one or more movements of the first hierarchal set of interconnected bones of the first 3D model with one or more movements of the object tracked by the motion-sensing device by the generation of the second 3D model.

The apparatus may render the generated second 3D model on the display device in real time, near-real time, or lag time. The second 3D model may have one or more synchronized movements. In accordance with an embodiment, the received bone structure information may be captured by the motion-sensing device from a view point of the object. Further, the generated second 3D model may be viewed on the display device from a plurality of view-points of the object. The plurality of view-points may include the view point of the object that was captured by the motion-sensing device. The generated second 3D model may be rendered on the display device to create a virtual presence of the object at a first location and the object may be located at a second location.

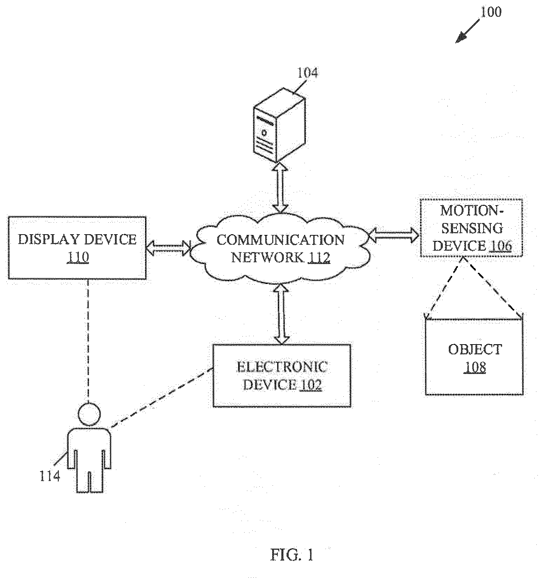

FIG. 1 is a block diagram that illustrates an exemplary network environment to generate realistic animation for view point transform, in accordance with an embodiment of the disclosure. With reference to FIG. 1, there is shown a network environment 100. The network environment 100 may include an electronic device 102, a server 104, a motion-sensing device 106, an object 108, a display device 110, and a communication network 112. There is further shown a user 114 associated with the electronic device 102. The user 114 may also be associated with the display device 110. The electronic device 102 may be communicatively coupled to the server 104, the motion-sensing device 106, and the display device 110, via the communication network 112.

The electronic device 102 may comprise suitable logic, circuitry, interfaces, and/or code that may be configured to generate a realistic 3D-rigged model animation. As with an actual skeleton, a rig in a rigged 3D model includes a hierarchical set of interconnected bones, similar to the human system of joints and bones, which allows for the definition of movements used during animation of the rigged 3D model. The electronic device 102 may be configured to animate a realistic 3D-rigged model on the display device 110, based on the movements of the object 108 tracked by the motion-sensing device 106. Examples of the electronic device 102 may include, but are not limited to, a gaming device, a video-conferencing system, an augmented reality-based device, a computing device, a server, a computer work-station, a mainframe machine, and/or other electronic devices.

The server 104 may comprise suitable circuitry, interfaces, and/or code that may be configured to store one or more rigged 3D models. Examples of the server 104 may include, but are not limited to, an application server, a cloud server, a web server, a database server, a file server, a gaming server, a mainframe server, or a combination thereof.

The motion-sensing device 106 may comprise suitable logic, circuitry, interfaces, and/or code that may be configured to capture the motion of the object 108. The motion-sensing device 106 may be configured to capture one or more poses of the object 108 in real time, near-real time, or lag time. The motion-sensing device 106 may be further configured to determine bone structure information of the object 108, based on a corresponding captured pose. The bone structure information may include skeleton orientation information of the object 108. The motion-sensing device 106 may be configured to transmit the determined bone structure information to the electronic device 102, via the communication network 112. The motion-sensing device 106 may comprise a plurality of sensors, such as a depth sensor, an infrared (IR) sensor, and/or a color sensor, (such as a red-green-blue (RGB) sensor), which may capture the one or more poses of the object 108 from one view point. For example, the motion-sensing device 106 may capture a pose of the object 108 from a right side of the object 108. Thus, the right side of the object 108 may correspond to a view-point of the object 108 captured by the motion-sensing device 106. Examples of the motion-sensing device 106 may include, but are not limited to, the depth sensor, the IR sensor, the RGB sensor, a 3D-mesh structure generator used to move an object, such as the object 108, an image sensor, and/or a motion-detector device.

The object 108 may refer to an object-of-interest, whose motion is to be captured by the motion-sensing device 106. The object 108 may be a human, an animal, or a robot that may mimic natural body movements of a real human or animal. A human body includes a skeleton that provides a framework that supports the body and maintains its shape. The human skeleton includes a hierarchical set of interconnected bones, where joints (also referred to as articulations) between the bones allow a certain degree of movement of the human body parts, such as head, hands, and feet.

The display device 110 may comprise suitable logic, circuitry, interfaces, and/or code that may be configured to render the rigged 3D model received from the electronic device 102. In accordance with an embodiment, the display device 110 may receive input from a user, such as the user 114. In such a scenario, the display device 110 may be a touch screen that enables the user 114 to provide input. In accordance with an embodiment, the display device 110 may receive the input through a virtual keypad, a stylus, a gesture-based input, and/or a touch-based input. The display device 110 may be realized through several known technologies such as, but not limited to, a Liquid Crystal Display (LCD) display, a Light Emitting Diode (LED) display, a plasma display, and/or an Organic LED (OLED) display technology. In accordance with an embodiment, the display device 110 may refer to a display screen of a smart-glass device, see-through display, projection-based display, an electro-chromic display, and/or a transparent display. The see-through display may be a transparent or a semi-transparent display. In accordance with an embodiment, the see-through display and/or the projection-based display may generate a 3D optical illusion that the rigged 3D model is floating in air at a pre-determined distance from a user's eye, which is intended to provide an enhanced user experience.

The communication network 112 may include a communication medium through which the electronic device 102 may be communicatively coupled to the server 104 and/or the display device 110. Examples of the communication network 112 may include, but are not limited to, the Internet, a cloud network, a Wireless Fidelity (Wi-Fi) network, a Local Area Network (LAN), and/or a Metropolitan Area Network (MAN). Various devices in the network environment 100 may be configured to connect to the communication network 112, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

In operation, the electronic device 102 may be configured to store a first 3D model. The first 3D model may correspond to a rigged 3D model, which may include a first hierarchal set of interconnected bones. The first hierarchal set of interconnected bones may correspond to a digital rig, which allows definition of movements during animation of the rigged 3D model. The first hierarchal set of interconnected bones within the rigged 3D model may comprise one or more root bones, one or more non-root bones, and one or more end bones. The one or more root bones refer to bones that have no parent bone. The one or more non-root bones refer to bones that have at least one parent bone. The one or more end bones refer to bones that provide support to one or more terminal portions, such as head portion, thumb portion, feet portion, of the rigged 3D model. The first hierarchal set of interconnected bones in the first 3D model may be defined in a first set of bone orientations. The first set of bone orientations may include bone orientations that may represent an initial rest pose orientation of each bone in the first hierarchal set of interconnected bones.

The electronic device 102 may be configured to determine the first set of bone orientations of the first hierarchal set of interconnected bones. The first 3D model may further include a surface representation, such as a mesh structure, of one or more portions of the first 3D model. The surface representation of the one or more portions of the first 3D model may be deformed in the event that the first set of bone orientations is modified based on bone structure information of an object, such as the object 108, received from the motion-sensing device 106.

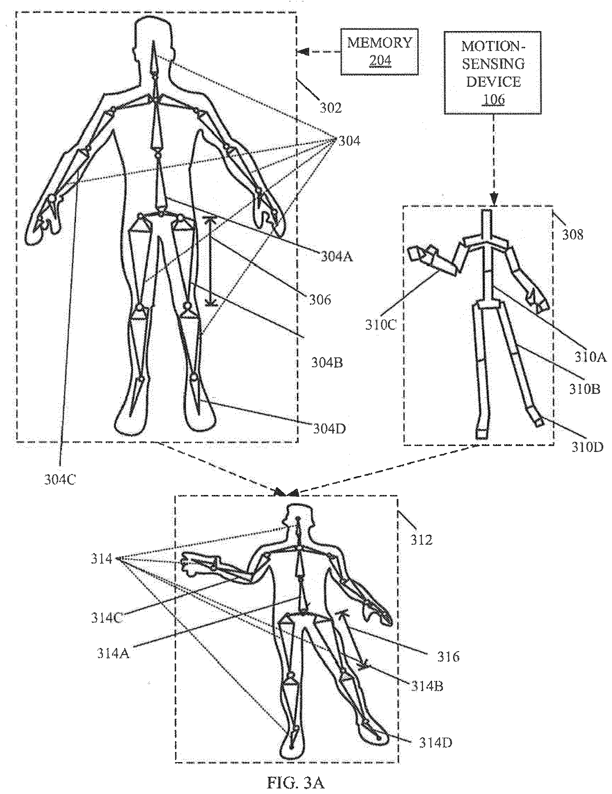

The object 108 may include a skeletal structure, reffered to as a second hierarchal set of interconnected bones that supports the structure of the object 108. The object 108 may correspond to a human, an animal, or a robot that may mimic natural body movements of a real human or animal. The motion-sensing device 106 usually captures one or more poses of the object 108 from one view-point during tracking of motion of the object 108. Thus, a captured pose of the object 108 from one view-point may comprise a partial depth data information of the object 108. The partial depth data may comprise information that relates to distance of different surfaces or body parts of an object, such as the object 108, captured from one view-point. For example, the object 108 may be located at a position that the motion-sensing device 106 may be able to capture only a right-side profile view of the object 108. In such a case, the right-side profile view of the object 108 may refer to the captured view-point. After the capture of the pose of the object 108, the motion-sensing device 106 may be configured to determine the bone structure information of the second hierarchal set of interconnected bones of the object 108. An example of the bone structure of the object 108 is described later in FIG. 3A. The bone orientation information may represent the captured pose of the object 108.

The bone structure information may include bone orientation information and size information of the second hierarchal set of interconnected bones of the object 108. The size information may represent an anatomical physique of the object 108. The bone orientation information in the bone structure information may comprise at least bone position information, in a fixed global coordinate system, of each bone in the second hierarchal set of interconnected bones of the object 108. The bone orientation information in the bone structure information may further comprise absolute bone orientation information, in a fixed global coordinate system of one or more root bones and one or more non-root bones in the second hierarchal set of interconnected bones of the object 108. The absolute bone orientation information in the fixed global coordinate system may represent the captured pose of the object 108. The motion-sensing device 106 may further transmit the bone structure information to the electronic device 102 in real time, near-real time, or a lag time.

The electronic device 102 may be configured to receive the bone structure information of the second hierarchal set of interconnected bones of the object 108, whose motion may be tracked by the motion-sensing device 106. The electronic device 102 may be further configured to modify the first set of bone orientations of the first hierarchal set of interconnected bones of the first 3D model to a second set of bone orientations. The electronic device 102 may modify the first set of bone orientations to the second set of bone orientations, based on the received bone structure information from the motion-sensing device 106. For the modification, the electronic device 102 may be configured to compute relative bone orientations for the first hierarchal set of interconnected bones, based on the received bone structure information.

In accordance with an embodiment, the electronic device 102 may be configured to compute the relative bone orientation of each of the one or more root bones, with respect to a corresponding root bone in the second hierarchal set of interconnected bones. The relative bone orientation of a root bone with respect to a corresponding root bone in the second hierarchal set of interconnected bones may be computed based on the bone structure information of the corresponding root bone. For example, the electronic device 102 may determine a difference between the bone orientation of a root bone in the first hierarchal set of interconnected bones and a bone orientation of the corresponding root bone in the second hierarchal set of interconnected bones. The electronic device 102 may determine the bone orientation of the corresponding root bone based on the bone orientation information obtained from the received bone structure information of the object 108. The determined difference may correspond to the relative bone orientation. The electronic device 102 may further utilize the relative bone orientation to modify the first set of bone orientations of the one or more root bones in the first hierarchal set of interconnected bones to the second set of bone orientations.

In accordance with an embodiment, the electronic device 102 may be configured to compute the relative bone orientation of each of the one or more non-root bones, with respect to a corresponding non-root bone in the second hierarchal set of interconnected bones. The electronic device 102 may compute the relative bone orientation of a non-root bone in the first hierarchal set of interconnected bones, with respect to a corresponding non-root bone in the second hierarchal set of interconnected bones based on the received bone structure information of the corresponding non-root bone. In case of a non-root bone, the bone structure information of a parent bone of the non-root bone in the first hierarchal set of interconnected bones may also be used for the computation of the relative bone orientation of the non-root bone in the first hierarchal set of interconnected bones. The parent bone of the non-root bone may refer to a bone in the first hierarchal set of interconnected bones, which is interconnected with the non-root bone. Further, movement of the parent bone may affect the movement of the corresponding non-root bone.

In accordance with an embodiment, the electronic device 102 may be configured to compute the relative bone orientation of each of the one or more end bones, with respect to a corresponding end bone in the second hierarchal set of interconnected bones, based on a joint position of each of the one or more end bones in the first hierarchal set of interconnected bones. The electronic device 102 may further utilize bone position information in the bone structure information to compute the relative bone orientation of each of the one or more end bones in the first hierarchal set of interconnected bones. For example, the electronic device 102 may determine a joint position of an end bone in the first hierarchal set of interconnected bones. Further, the electronic device 102 may utilize the determined joint position of the end bone and the bone position information of a corresponding end bone in the second hierarchal set of interconnected bones, to compute the relative bone orientation of the end bone in the first hierarchal set of interconnected bones. The electronic device 102 may utilize the relative bone orientation to modify the first set of bone orientations of the one or more end bones in the first hierarchal set of interconnected bones to the second set of bone orientations.

After the modification, the electronic device 102 may be configured to determine a set of constraints for movement of the first hierarchal set of interconnected bones of the first 3D model. The electronic device 102 may determine the set of constraints to stabilize the second set of bone orientations. A constraint for a bone in the first hierarchal set of interconnected bones may refer to a restriction applied on the movement of the corresponding bone to stabilize the orientation of the bone. For example, the electronic device 102 may determine a constraint for a bone (such as a wrist bone), in the first hierarchal set of interconnected bones, which restricts a rotation of the corresponding bone to certain degrees around an axis of rotation (such as Y axis).

In accordance with an embodiment, the electronic device 102 may further modify the first set of bone orientations of the first hierarchal set of interconnected bones to the second set of bone orientations, based on the determined set of constraints. For example, the electronic device 102 may update the relative bone orientation for the first hierarchal set of interconnected bones, based on the set of constraints. Thus, the updated relative bone orientation may be utilized to modify the first set of bone orientations of the one or more root bones in the first hierarchal set of interconnected bones to the second set of bone orientations. Further details of the determination of the set of constraints is described in FIGs. 3A to 3D.

The electronic device 102 may be further configured to transform a size of one or more bones in the first hierarchal set of interconnected bones of the first 3D model to generate a second 3D model. The electronic device 102 may transform the size of the one or more bones in the first hierarchal set of interconnected bones, based on the received bone structure information. The electronic device 102 may utilize the size information in the bone structure information of the second hierarchal set of interconnected bones of the object 108 to transform the size of the one or more bones in the first hierarchal set of interconnected bones. For example, the electronic device 102 may increase the size of a bone in the first hierarchal set of interconnected bones to match a size of a bone in the second hierarchal set of interconnected bones, based on the received bone structure information. The generated second 3D model may resemble the object 108. Further, the generation of the second 3D model may include a deformation of the surface representation of the one or more portions of the first 3D model. The electronic device 102 may deform the surface representation of the one or more portions of the first 3D model, based on the second set of bone orientations and the transformed first hierarchal set of interconnected bones. The electronic device 102 may be further configured to animate the generated second 3D model on the display device 110, in accordance with the second set of orientations and the transformed first hierarchal set of interconnected bones.

In accordance with an embodiment, the motion-sensing device 106 may be configured to capture one or more poses of a plurality of objects similar to the object 108. The motion-sensing device 106 may determine the bone structure information pertaining to each of the plurality of objects in the captured one or more poses. Thus, the electronic device 102 may receive the bone structure information of the plurality of objects from the motion-sensing device 106 in real time, near-real time, or a lag time, via the communication network 112. Further, the electronic device 102 may generate a plurality of second 3D models concurrently, based on the one or more first 3D models and the received bone structure information of the plurality of objects from the motion-sensing device 106. In accordance with an embodiment, the electronic device 102 may retrieve the first 3D model stored in the server 104. In accordance with an embodiment, the functions or operations of the electronic device 102 may be implemented by the server 104, without deviation from the scope of the disclosure.

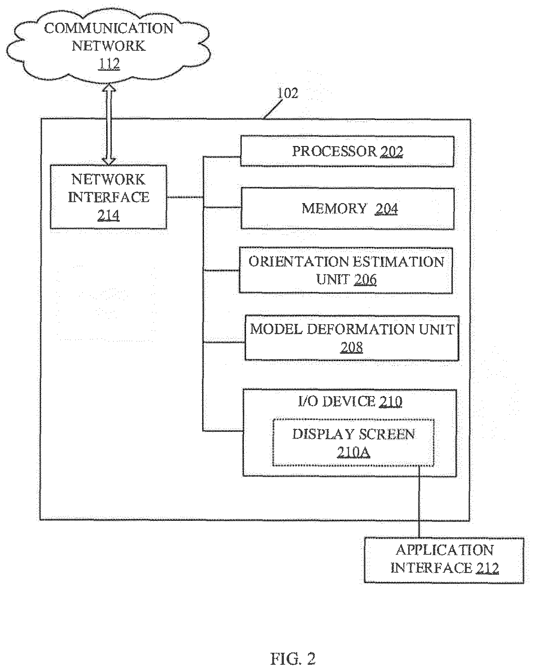

FIG. 2 is a block diagram that illustrates an exemplary electronic device, in accordance with an embodiment of the disclosure. FIG. 2 is explained in conjunction with elements from FIG. 1. With reference to FIG. 2, there is shown the electronic device 102. The electronic device 102 may include a processor 202, a memory 204, an orientation estimation unit 206, a model deformation unit 208, an input/output (I/O) device 210, and a network interface 214. The I/O device 210 may include a display screen 210A, which may be utilized to render an application interface 212. The processor 202 may be communicatively coupled to the memory 204, the orientation estimation unit 206, the model deformation unit 208, the I/O device 210, and the network interface 214. The network interface 214 may be configured to communicate with the server 104 and the motion-sensing device 106, via communication network 112.

The processor 202 may comprise suitable logic, circuitry, interfaces, and/or code that may be configured to execute a set of instructions stored in the memory 204. The processor 202 may be implemented based on a number of processor technologies known in the art. Examples of the processor 202 may be a Graphical Processing Unit (GPU), a Central Processing Unit (CPU), X86-based processor, a Reduced Instruction Set Computing (RISC) processor, an Application-Specific Integrated Circuit (ASIC) processor, a Complex Instruction Set Computing (CISC) processor, other processors, and/or a combination thereof. For example, the GPU and the CPU may work concurrently to generate realistic animation. In such a case, the relative orientation computation may be executed by the CPU and the GPU may execute the rendering of the 3D model, such as the first 3D model and the second 3D model.

The memory 204 may comprise suitable logic, circuitry, and/or interfaces that may be configured to store a set of instructions executable by the processor 202. The memory 204 may be configured to store operating systems and associated applications. The memory 204 may be further configured to store various algorithms to determine one or more bone orientations of a hierarchal set of interconnected bones in a rigged 3D model. Examples of implementation of the memory 204 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The orientation estimation unit 206 may comprise suitable logic, circuitry, interfaces, and/or code that may be configured to determine the one or more bone orientations of a hierarchal set of interconnected bones in a rigged 3D model. The orientation estimation unit 206 may be further configured to compute relative orientation of a bone in a rigged 3D model with respect to another bone associated with the object 108. The orientation estimation unit 206 may be implemented as a separate processor or circuitry in the electronic device 102. The orientation estimation unit 206 and the processor 202 may be implemented as an integrated processor or a cluster of processors that perform the functions of the orientation estimation unit 206 and the processor 202. The orientation estimation unit 206 may be implemented as a set of instructions stored in the memory 204, which upon execution by the processor 202, may perform the functions and operations for the electronic device 102.

The model deformation unit 208 suitable logic, circuitry, interfaces, and/or code that may be configured to modify a first set of bone orientations of a hierarchal set of interconnected bones of a rigged 3D model, such as the first 3D model, to a second set of bone orientations. The model deformation unit 208 may be further configured to perform a bone length parameterization operation on the first 3D model to generate a second 3D model. The bone length parameterization operation may transform the size of one or more bones in the hierarchal set of interconnected bones in the first 3D model based on a size of one or more bones of the object 108. Further, the model deformation unit 208 may be configured to animate the second 3D model on the display device 110. The model deformation unit 208 may be implemented as a separate processor or circuitry in the electronic device 102. The model deformation unit 208 and the processor 202 may be implemented as an integrated processor or a cluster of processors that perform the functions of the model deformation unit 208 and the processor 202. The model deformation unit 208 may be implemented as a set of instructions stored in the memory 204, which upon execution by the processor 202, may perform the functions and operations for the electronic device 102.

The I/O device 210 may comprise suitable logic, circuitry, interfaces, and/or code that may be configured to receive an input from the user 114. The I/O device 210 may be further configured to provide an output to the user 114. The I/O device 210 may comprise various input and output devices, which may be configured to communicate with the processor 202. Examples of the input devices may include, but are not limited to, a touch screen, a keyboard, a mouse, a joystick, and/or a microphone. Examples of the output devices may include, but are not limited to, the display screen 210A and/or a speaker.

The display screen 210A may comprise suitable logic, circuitry, interfaces, and/or code that may be configured to render the application interface 212 to display realistic animation of the rigged 3D model from a plurality of view-points. In accordance with an embodiment, the display screen 210A may be able to receive input from the user 114. In such a scenario, the display screen 210A may be a touch screen, which enables the user 114 to provide input. The touch screen may correspond to at least one of a resistive touch screen, a capacitive touch screen, or a thermal touch screen. In accordance with an embodiment, the display screen 210A may receive the input through a virtual keypad, a stylus, a gesture-based input, and/or a touch-based input. The display screen 210A may be realized through several known technologies such as, but not limited to, at least one of a Liquid Crystal Display (LCD) display, a Light Emitting Diode (LED) display, a plasma display, and/or an Organic LED (OLED) display technology, and/or other display. In accordance with an embodiment, the display screen 210A may refer to a display screen of smart-glass device, a see-through display, a projection-based display, an electro-chromic display, and/or a transparent display. The display screen 210A may be similar to the display device 110.

The application interface 212 may correspond to a user interface (UI) rendered on a display screen, such as the display screen 210A. In accordance with an embodiment, the application interface 212 may be further rendered on a display device, such as the display device 110. The application interface 212 may display the animated second 3D model, associated with an object (such as the object 108), to the user 114. The second 3D model may be viewed from a plurality of view-points, by use of the application interface 212. An example of the application interface 212 may include, but is not limited to, a graphical user interface (GUI).

The network interface 214 may comprise suitable logic, circuitry, interfaces, and/or code that may be configured to establish communication between the electronic device 102, the server 104, and the motion-sensing device 106, via the communication network 112. The network interface 214 may be implemented by use of various known technologies to support wired or wireless communication of the electronic device 102 with the communication network 112. The network interface 214 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The network interface 214 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), Wi-MAX, a protocol for email, instant messaging, and/or Short Message Service (SMS).

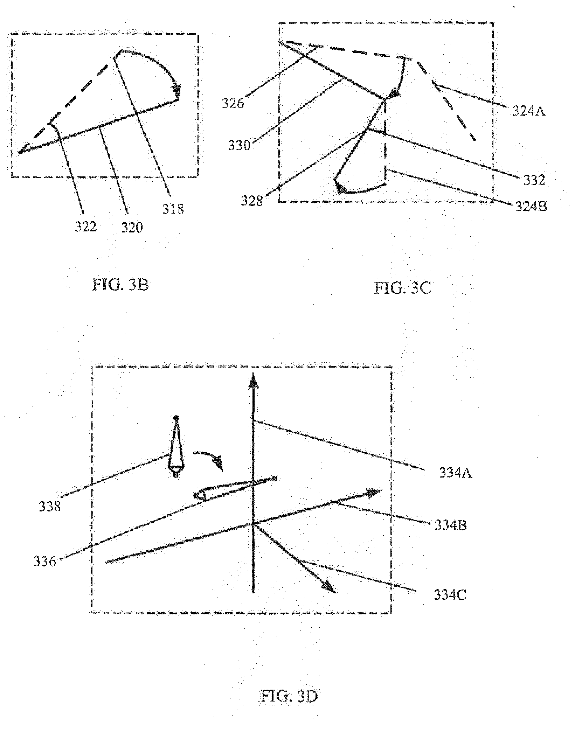

The functions and/or operations performed by the electronic device 102, as described in FIG. 1, may be performed by the processor 202, the orientation estimation unit 206, and/or the model deformation unit 208. Other operations performed by the processor 202, the orientation estimation unit 206, and the model deformation unit 208 are further described, for example, in the FIGs. 3A, 3B, 3C, and 3D.

FIGs. 3A, 3B, 3C, and 3D, collectively, illustrate an example of generation of a second 3D model from a first 3D model, in accordance with an embodiment of the disclosure. FIGs. 3A, 3B, 3C, and 3D are described in conjunction with elements from FIGs. 1 and 2. With reference to FIG. 3A, there is shown a first 3D model 302 stored in the memory 204. The first 3D model 302 may be a rigged 3D model that may include a digital rig, such as a first hierarchal set of interconnected bones 304. The first hierarchal set of interconnected bones 304 may include one or more root bones, such as a root bone 304A. The first hierarchal set of interconnected bones 304 may further include one or more non-root bones, such as a first non-root bone 304B and a second non-root bone 304C. The first hierarchal set of interconnected bones 304 may also include one or more end bones, such as an end bone 304D. There is also shown a bone length 306 of the first non-root bone 304B.

A skeletal structure, such as a second hierarchal set of interconnected bones 308, of the object 108 as determined by the motion-sensing device 106 is also shown. The bone structure information of the second hierarchal set of interconnected bones 308 of the object 108, such as a human, may be received from the motion-sensing device 106. A root bone 310A, a first non-root bone 310B, a second non-root bone 310C, and an end bone 310D, is shown in the second hierarchal set of interconnected bones 308 received as bone structure information from the motion-sensing device 106.

A second 3D model 312 is also shown in the FIG. 3A. The second 3D model 312 may include a transformed first hierarchal set of interconnected bones 314. A root bone 314A, a first non-root bone 314B, a second non-root bone 314C, an end bone 314D are depicted in the transformed first hierarchal set of interconnected bones 314 of the second 3D model 312. A bone length 316 of the first non-root bone 314B is depicted in the transformed first hierarchal set of interconnected bones 314 of the second 3D model 312.

In accordance with the example, the memory 204 may be configured to store the first 3D model 302. The root bone 304A may represent one of the root bones of the first hierarchal set of interconnected bones 304. The first non-root bone 304B and the second non-root bone 304C may represent two non-root bones in the first hierarchal set of interconnected bones 304. The end bone 304D may represent one of the end bones in first hierarchal set of interconnected bones 304. The first hierarchal set of interconnected bones 304 may provide a framework to support surface representation, such as a mesh structure, of one or more portions of the first 3D model 302. The one or more portions of the first 3D model 302 may refer to one or more body portions, such as head portion, arm portions, leg portions, and/or the like.

The first hierarchal set of interconnected bones 304 of the first 3D model 302 may be defined (or lie) in a first set of bone orientations, which may represent a first pose. The first set of bone orientations may comprise bone alignments and directions, which may represent an initial rest pose of each bone in the first hierarchal set of interconnected bones 304. The orientation estimation unit 206 may be configured to determine the first set of bone orientations of the first hierarchal set of interconnected bones 304 of the first 3D model 302. The orientation estimation unit 206 may determine a first set of quaternions which may represent the first set of bone orientations. A quaternion refers to a mathematical notation which is used to represent possible orientations and/or rotation of an object or one or more portions of the object, such as the object 108, in a 3D space.

The processor 202 may be configured to receive the bone structure information of the second hierarchal set of interconnected bones 308 of an object, such as the object 108, from the motion-sensing device 106. The processor 202 may receive the bone structure information, via the network interface 214, from the motion-sensing device 106 in real time, near-real time, or a lag time. In accordance with an embodiment, the motion-sensing device 106 may have captured the bone structure information of the object 108 from one view-point. At the time of capture of the bone structure information, the object 108 may be oriented in a second pose. For example, a right profile view of the object 108 may lie in front of the motion-sensing device 106. Thus, the motion-sensing device 106 may capture the bone structure information of the right profile view of the object 108, which is oriented in the second pose. Alternatively stated, the motion-sensing device 106 may capture partial bone structure information, such as the partial depth data, of the object 108 from a single view-point.

The bone structure information may include bone orientation information and size information of the second hierarchal set of interconnected bones 308 of the object 108. The bone orientation information may comprise at least bone position information, in the fixed global coordinate system, of each bone in the second hierarchal set of interconnected bones 308 of the object 108. For example, a vector [1, 1, 0] may represent bone position of a bone in the second hierarchal set of interconnected bones 308. The bone orientation information may further comprise absolute bone orientation, in the fixed global coordinate system, of the second hierarchal set of interconnected bones 308 of the object 108. The bone orientations may be represented as a second set of quaternions. The second hierarchal set of interconnected bones 308 of the object 108 may further comprise one or more root bones, one or more non-root bones, and one or more end bones. Thus, the bone structure information may comprise the orientation and size information associated with the one or more root bones (such as the root bone 314A), the one or more non-root bones (such as the first non-root bone 314B, and the second non-root bone 314C), and the one or more end bones (such as the end bone 314D), of the second hierarchal set of interconnected bones 308.

After receipt of the bone structure information from the motion-sensing device 106, the model deformation unit 208 may be configured to modify the first set of bone orientations of the first hierarchal set of interconnected bones 304 in the first 3D model 302 to a second set of bone orientations. Alternatively stated, the first pose of the first 3D model 302 may be modified to resemble the second pose of the object 108, based on the received bone structure information. For the modification, the model deformation unit 208 may be configured to compute relative bone orientation for the first hierarchal set of interconnected bones 304 in the first 3D model 302, based on the received bone structure information of the second hierarchal set of interconnected bones 308. Alternatively stated, the model deformation unit 208 may be configured to compute relative bone orientation of the one or more root bones, the one or more non-root bones, and the one or more end bones, of the first hierarchal set of interconnected bones 304 in the first 3D model 302. Examples of the computation of the relative bone orientation are provided, for example, in FIGs. 3B to 3D.

The model deformation unit 208 may be further configured to determine a set of constraints for movement of the first hierarchal set of interconnected bones 304 of the first 3D model 302. The model deformation unit 208 may determine the set of constraints to stabilize the second set of bone orientations. Alternatively stated, the model deformation unit 208 may apply a set of restrictions on the movement of the first hierarchal set of interconnected bones 304 to generate realistic movements in the second 3D model 312. For example, the model deformation unit 208 may determine one or more 3D (x, y and z) coordinates of a bone, such as a wrist bone, in the first hierarchal set of interconnected bones 304, based on the corresponding orientation of the wrist bone in the second set of orientations. A constraint may be determined for the movement of the wrist bone in a corresponding axis of rotation, such as the "Y" axis. The model deformation unit 208 may set the constraint, such as "0 degrees", for the movement of the wrist bone in the "Y" axis direction (i.e., the axis of rotation of the wrist bone). In accordance with an embodiment, the model deformation unit 208 may further modify the first set of bone orientations of the first hierarchal set of interconnected bones 304 in the first 3D model 302 to the second set of bone orientations, based on the determined set of constraints.

The model deformation unit 208 may be further configured to transform the size of one or more bones in the first hierarchal set of interconnected bones 304 of the first 3D model 302, to generate the second 3D model 312. The model deformation unit 208 may transform the size of the one or more bones in the first hierarchal set of interconnected bones 304 in the first 3D model 302, based on the received bone structure information. The model deformation unit 208 may utilize the size information of the second hierarchal set of interconnected bones 308 in the bone structure information to transform the size of the one or more bones in the first hierarchal set of interconnected bones 304. As illustrated, the model deformation unit 208 may automatically decrease the bone length 306 of the first non-root bone 304B to the bone length 316, based on the size information of the first non-root bone 310B in the second hierarchal set of interconnected bones 308. Similarly, the model deformation unit 208 may transform the size of the other one or more bones in the first hierarchal set of interconnected bones 304, based on the corresponding size information of the corresponding one or more bones in the second hierarchal set of interconnected bones 308. The second 3D model 312 may comprise the transformed first hierarchal set of interconnected bones defined in the second set of orientations. The second 3D model 312 may resemble the pose and structure of the object 108, as captured by the motion-sensing device 106.

The generation of the second 3D model 312 may further include a deformation of the surface representation of the one or more portions of the first 3D model 302. The model deformation unit 208 may be configured to deform the surface representation of the one or more portions of the first 3D model 302, based on the second set of bone orientations and the transformed first hierarchal set of interconnected bones 314. As illustrated, the second non-root bone 304C may be modified to the second non-root bone 314C, due to a modification of an initial orientation to a final orientation, based on the bone orientation information of the second non-root bone 310C in the bone structure information. Due to this modification, the surface representation associated with the second non-root bone 304C may be deformed in accordance with the final orientation of the second non-root bone 314C in the second 3D model 312.

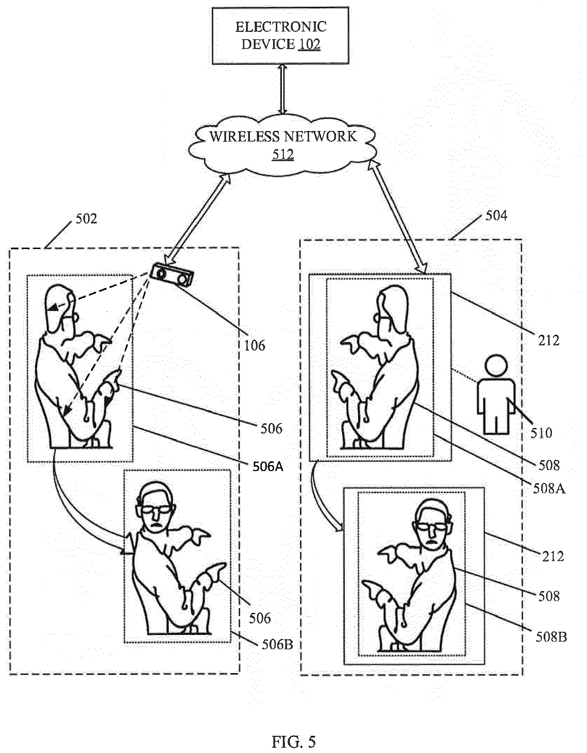

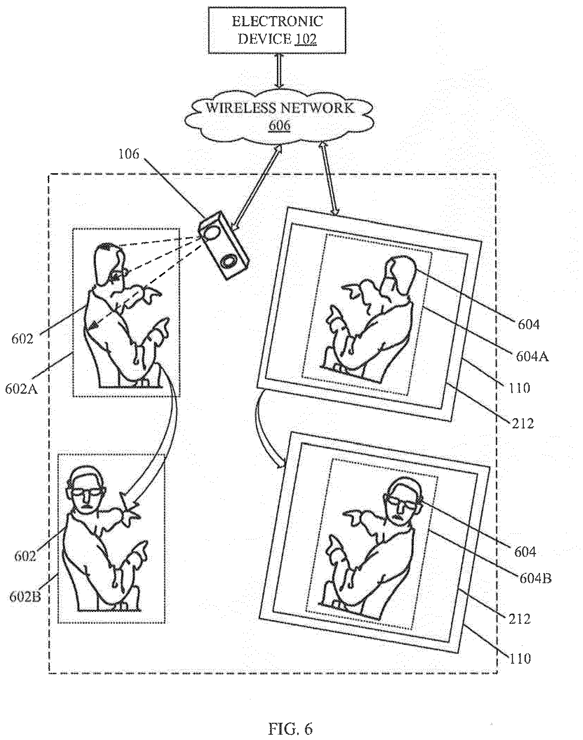

The processor 202 may be further configured to animate the generated second 3D model 312 on the display device 110 in accordance with the second set of orientations and the transformed first hierarchal set of interconnected bones 314. The animation of the second 3D model 312 may include real time, near-real time or a lag time modification and transformation of the first 3D model 302, based on the bone structure information received from the motion-sensing device 106 in real time, near-real time, or a lag time. The animation of the generated second 3D model 312 may enable the generated second 3D model 312 to be viewed from a plurality of view-points on the display device 110. The plurality of view-points may include the one-view point in which the motion-sensing device 106 may have captured the second pose of the object 108. The generated second 3D model 312 may provide an ability to an apparatus, such as the electronic device 102, to display the rigged 3D model without any artifact. Actual movements of a user, such as the user 114, tracked by the motion-sensing device 106 may be imitable by the generated second 3D model 312 as a result of the modification and transformation of the first hierarchal set of interconnected bones 304 of the first 3D model 302. The generated second 3D model 312 may be used in video-conferencing to display the rigged 3D model of a person with the realistic movements instead of a generic video sharing between two devices of the video-conferencing system. Further, the generated second 3D model 312 may be used to create a virtual presence in a virtual reality based telepresence system, as described for example, in FIG. 5. The generated second 3D model 312 may also find application in gaming systems, as described for example, in FIG. 6.

With reference to FIG. 3B, there is shown a rest pose bone orientation 318 of the root bone 304A, an absolute bone orientation 320 of the root bone 310A in the second hierarchal set of interconnected bones 308, and a relative bone orientation 322 of the root bone 304A. The orientation estimation unit 206 may determine the rest pose bone orientation 318 of the root bone 304A. The rest pose bone orientation 318 of the root bone 304A may be included in the first set of bone orientations of the first hierarchal set of interconnected bones 304 of the first 3D model 302. The rest pose bone orientation 318 of the root bone 304A may be represented by a rest pose quaternion ($R$). Further, the bone structure information, received from the motion-sensing device 106, may comprise bone orientation information pertaining to the absolute bone orientation 320 of the root bone 310A in the second hierarchal set of interconnected bones 308. The absolute bone orientation 320 of the root bone 310A may be represented by an absolute quaternion ($Q$).

The orientation estimation unit 206 may compute the relative bone orientation 322 of the root bone 304A, with respect to the root bone 310A in the second hierarchal set of interconnected bones 308. For the computation of the relative bone orientation 322 of the root bone 304A, the orientation estimation unit 206 may determine a difference ($W$) between the rest pose quaternion ($R$) and the absolute quaternion ($Q$) by use of equation (1), as shown below:

$$W = R^{-1}Q \qquad\qquad (1)$$

Where, $R^{-1}$ represents a conjugate of the rest pose quaternion ($R$).

The difference ($W$) may represent the relative bone orientation 322 of the root bone 304A. The model deformation unit 208 may further apply the relative bone orientation 322 of the root bone 304A to the rest pose bone orientation 318 of the root bone 304A. The application of the relative bone orientation 322 to the rest pose bone orientation 318 may modify the rest pose bone orientation 318 to the absolute bone orientation 320. The modification of the rest pose bone orientation 318 to the absolute bone orientation 320 is an example to describe the modification of the first set of bone orientations to the second set of bone orientations.

The model deformation unit 208 may further be configured to determine the set of constraints for the root bone 304A, to stabilize the corresponding orientation in the second set of bone orientations. In accordance with an embodiment, the model deformation unit 208 may update the absolute bone orientation 320 of the root bone 310A, based on the corresponding constraint. For example, the root bone 310A in the bone structure information may be associated with an unrealistic movement that may not be possible for a real human. Thus, the model deformation unit 208 may determine a constraint for the movement of the root bone 310A. Further, based on the determined constraint, the orientation estimation unit 206 may update the absolute bone orientation 320 to make the movement realistic. In accordance with an embodiment, the orientation estimation unit 206 may re-compute the difference ($W$) between the rest pose quaternion ($R$) and the updated absolute quaternion ($Q$) associated with the updated absolute bone orientation 320. In accordance with an embodiment, the model deformation unit 208, in conjunction with the orientation estimation unit 206, may compute the relative bone orientation of the other one or more non-root bones as computed for the first non-root bone 304B.

With reference to FIG. 3C, there is shown a first rest pose bone orientation 324A of the first non-root bone 304B, a second rest pose bone orientation 324B of the first non-root bone 304B, and a rest pose bone orientation 326 of a parent bone of the first non-root bone 304B (FIG. 3A). There is also shown an absolute bone orientation 328 of the first non-root bone 310B, an absolute bone orientation 330 of the parent bone of the first non-root bone 310B, and a relative bone orientation 332 of the first non-root bone 304B.

The orientation estimation unit 206 may determine the first rest pose bone orientation 324A of the first non-root bone 304B. The first rest pose bone orientation 324A of the first non-root bone 304B may be included in the first set of bone orientations of the first hierarchal set of interconnected bones 304 of the first 3D model 302. The first rest pose bone orientation 324A may be represented by a first rest pose quaternion ($R_c$). Further, the bone structure information, received from the motion-sensing device 106, may comprise bone orientation information pertaining to the absolute bone orientation 328 of the first non-root bone 310B in the second hierarchal set of interconnected bones 308. The first non-root bone 310B in the second hierarchal set of interconnected bones 308, may correspond to the first non-root bone 304B in the first hierarchal set of interconnected bones 304 of the first 3D model 302. The absolute bone orientation 328 may be represented by an absolute quaternion ($Q_c$).

The orientation estimation unit 206 may determine the rest pose bone orientation 326 of the parent bone of the first non-root bone 304B. The rest pose bone orientation 326 of the parent bone of the first non-root bone 304B may be included in the first set of bone orientations of the first hierarchal set of interconnected bones 304 of the 3D model 302. The rest pose bone orientation 326 of the parent bone of the first non-root bone 304B may be represented by a rest pose quaternion ($R_p$). The bone structure information, received from the motion-sensing device 106, may further comprise bone orientation information pertaining to the absolute bone orientation 330 of the parent bone of the first non-root bone 310B in the second hierarchal set of interconnected bones 308. The absolute bone orientation 330 of the parent bone of the first non-root bone 310B in the second hierarchal set of interconnected bones 308 may be represented by an absolute quaternion ($Q_P$).

The orientation estimation unit 206 may compute the relative bone orientation 332 of the first non-root bone 304B in the first hierarchal set of interconnected bones 304 with respect to the first non-root bone 310B in the second hierarchal set of interconnected bones 308. For the computation of the relative bone orientation 332 of the first non-root bone 304B, the orientation estimation unit 206 may determine a first difference ($W_1$) between the rest pose quaternion ($R_p$) and the first rest pose quaternion ($R_p$) by use of equation (2), as shown below.

$$W_1 = R_p^{-1} R_c \qquad (2)$$

Where, $R_p^{-1}$ represents a conjugate of the rest pose quaternion ($R_p$) of a parent bone of the first non-root bone 304B (child bone); and $R_c$ represents the first rest pose quaternion ($R_c$) of the child bone (such as the first non-root bone 304B).

The orientation estimation unit 206 may further determine a second difference ($W_2$) between the absolute quaternion ($Q_p$) and the absolute quaternion ($Q_c$) by use of equation (3), as shown below.

$$W_2 = Q_p^{-1} Q_c \qquad (3)$$

Where, $Q_p^{-1}$ represents a conjugate of the absolute quaternion ($Q_p$).

The orientation estimation unit 206 may further determine a third difference ($W_3$) between the first difference ($W_1$) and the second difference ($W_2$) by use of equation (4), as shown below.

$$W_3 = (R_p^{-1} R_c)^{-1} Q_p^{-1} Q_c \qquad (4)$$

Where, $(R_p^{-1} R_c)^{-1}$ represents a conjugate of the first difference ($W_1$).

The third difference ($W_3$) may represent the relative bone orientation 332 of the first non-root bone 304B. The model deformation unit 208 may further apply the relative bone orientation 332 to the second rest pose bone orientation 324B of the first non-root bone 304B. The application of the relative bone orientation 332 may occur in the event that the parent bone of the first non-root bone 304B moves from the rest pose bone orientation 326 to the absolute bone orientation 330, while the first non-root bone 304B remains in the first rest pose bone orientation 324A. The second rest pose bone orientation 324B may represent a rest pose bone orientation of the first non-root bone 304B. In such a scenario, the first rest pose bone orientation 324A of the first non-root bone 304B may be referred to as the second rest pose bone orientation 324B. The application of the relative bone orientation 332 to the second rest pose bone orientation 324B may modify the second rest pose bone orientation 324B to the absolute bone orientation 328. The modification of the second rest pose bone orientation 324B to the absolute bone orientation 330 is an example of the modification of the first set of bone orientations to the second set of bone orientations.

The model deformation unit 208 may be further configured to determine the set of constraints for the first non-root bone 304B and the parent bone to stabilize the corresponding orientation in the second set of bone orientations. In accordance with an embodiment, the model deformation unit 208 may update the absolute bone orientation 330 of the parent bone of the first non-root bone 304B, based on the corresponding constraint. For example, the first non-root bone 310B in the bone structure information may have an unrealistic movement that may not be possible for an actual human. Thus, the model deformation unit 208 may determine a constraint for the movement of the first non-root bone 310B and the corresponding parent bone. Further, based on the determined constraint, the orientation estimation unit 206 may update the absolute bone orientation 330 of the parent bone of the first non-root bone 304B. Further, to make the movement realistic, the orientation estimation unit 206 may update the absolute bone orientation 328 of the first non-root bone 304B, based on the updated absolute bone orientation 330 of the corresponding bone.

In accordance with an embodiment, the orientation estimation unit 206 may re-compute the first difference ($W_1$), the second difference ($W_2$), and the third difference ($W_3$), based on the updated absolute bone orientation 328 of the first non-root bone 304B and the updated absolute bone orientation 330 of the corresponding parent bone. The model deformation unit 208, in conjunction with the orientation estimation unit 206, may compute the relative bone orientation of the other one or more non-root bones as computed for the first non-root bone 304B.

FIG. 3D there is shown a first axis 334A, a second axis 334B, a third axis 334C of a fixed global coordinate system. There is also shown a bone position 336 of the end bone 304D in the first 3D model 302 and a bone position 338 of the end bone 310D in the second hierarchal set of interconnected bones 308. The first axis 334A may represent a Y axis, the second axis 334B may represent an X axis, and the third axis 334C may represent a Z axis in the fixed global coordinate system.

The orientation estimation unit 206 may be configured to determine the bone position 336 of the end bone 304D in the fixed global coordinate system. The orientation estimation unit 206 may determine the joint position of the end bone 304D in the first 3D model 302. The orientation estimation unit 206 may utilize the orientation information in the first set of orientations, associated with the joint position of the end bone 304D, to determine the bone position 336 of the end bone 304D. The bone position 336 may refer to a vector, such as a vector that indicates position as coordinates, representing a position of the end bone 304D. The orientation estimation unit 206 may further identify the bone position 338 of the end bone 310D, based on the bone position information obtained from the bone structure information.

The orientation estimation unit 206 may further determine an absolute bone orientation of the end bone 310D, based on the determined bone position 336 of the end bone 304D and the identified bone position 338 of the end bone 310D. For the determination of the absolute bone orientation of the end bone 310D, the orientation estimation unit 206 may determine an axis of rotation of the end bone 310D by use of the equation (5), as shown below:

$$v = \left(v_x, v_y, v_z\right) = b_1 \times b_2 \tag{5}$$

Where, $v$ represents the axis of rotation of the end bone 310D;
$b_1$ represents a vector associated with the bone position 338 of the end bone 310D; and
$b_2$ represents another vector associated with the bone position 336 of the end bone 304D.

The orientation estimation unit 206 may further determine an angle of rotation ($\theta$) of the end bone 310D by use of the equation (6), as shown below:

$$\theta = \cos^{-1}\left(\frac{b_1.b_2}{\|b_1\|.\|b_2\|}\right) \tag{6}$$

Where, $\theta$ represents the angle of rotation of the end bone 310D;
$b_1$ represents the vector associated with the bone position 338 of the end bone 310D; and
$b_2$ represents the other vector associated with the bone position 336 of the end bone 304D.

After the determination of the axis of rotation ($v$) and the angle of rotation ($\theta$), the orientation estimation unit 206 may be configured to determine the absolute bone orientation of the end bone 310D by use of the equation (7), as shown below:

$$q = \left(\cos\left(\tfrac{1}{2}\theta\right), v_x \sin\left(\tfrac{1}{2}\theta\right), v_y \sin\left(\tfrac{1}{2}\theta\right), v_z \sin\left(\tfrac{1}{2}\theta\right)\right) \tag{7}$$

Where, q refers to a quaternion representing the absolute bone orientation of the end bone 310D.

After the determination of the absolute bone orientation of the end bone 310D, the orientation estimation unit 206 may compute a relative bone orientation of the end bone 304D with respect to the end bone 310D, in the second hierarchal set of interconnected bones 308. The orientation estimation unit 206 may compute the relative bone orientation of the end bone 304D by use of the absolute bone orientation of the end bone 310D and a rest pose bone orientation in the first set of orientations of the end bone 304D. The orientation estimation unit 206 may compute the relative bone orientation of the end bone 304D similar to that as described as described in FIG. 3C, for compution of the relative bone orientation of the first non-root bone 304B.

The model deformation unit 208, in conjunction with the orientation estimation unit 206, may further determine a constraint to stabilize the orientation associated with the end bone 304D by use of the same method to determine the constraint for the first non-root bone 304B as described previously in FIG. 3C. In accordance with an embodiment, the model deformation unit 208, in conjunction with the orientation estimation unit 206, may compute the relative bone orientation of the other one or more end bones as computed for the end bone 304D.

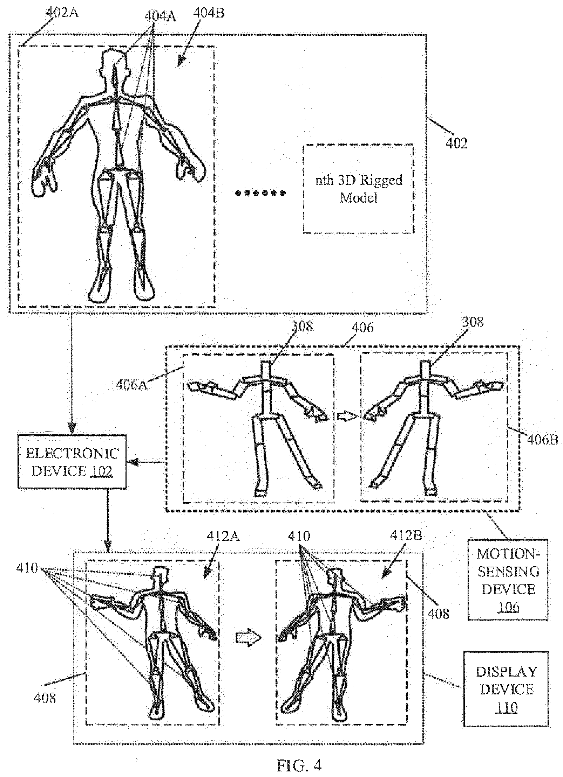

FIG. 4 illustrates a first exemplary scenario for implementation of the disclosed apparatus and method for generation of realistic rigged 3D model animation for view-point transform, in accordance with an embodiment of the disclosure. FIG. 4 is explained in conjunction with elements from FIGs. 1, 2, and 3A to 3D. With reference to FIG. 4, there is shown a plurality of rigged 3D models 402, such as a first rigged 3D model 402A stored in the memory 204. The first rigged 3D model 402A may comprise a first hierarchal set of interconnected bones 404A defined in a first set of orientations 404B.

There is also shown a plurality of poses 406, such as a first pose 406A and a second pose 406B, of a skeletal structure a same object, such as the object 108. The skeletal structure of the object 108 may include the second hierarchal set of interconnected bones 308. The first pose 406A of the second hierarchal set of interconnected bones 308 may be associated with first bone structure information. Further, the second pose 406B of the second hierarchal set of interconnected bones 308 may be associated with second bone structure information. There is also shown a second rigged 3D model 408 with a transformed first hierarchal set of interconnected bones 410 in different bone orienations, such as a second set of bone orientations 412A and a third set of bone orientations 412B. There is also shown the electronic device 102, the motion-sensing device 106, and the display device 110.

In accordance with the first exemplary scenario, the electronic device 102 may receive the first bone structure information from the motion-sensing device 106. The motion-sensing device 106 may have captured the first pose 406A of the object 108, such as a human, from one view-point. The first bone structure information may comprise bone orientation information and size information of the second hierarchal set of interconnected bones of the object 108 in the first pose 406A.

The electronic device 102 may modify the first set of bone orientations 404B of the first hierarchal set of interconnected bones 404A of the first rigged 3D model 402A, to the second set of bone orientations 412A based on the first bone structure information received from the motion-sensing device 106. The second set of bone orientations 412A may represent the first pose 406A of the object 108. Further, the electronic device 102 may transform the size of the first hierarchal set of interconnected bones 404A of the first rigged 3D model 402A, based on the size information of the second hierarchal set of interconnected bones 404A of the object 108. The modified and transformed first rigged 3D model 402A may correspond to the second rigged 3D model 408, which may resemble the first pose 406A of the object 108.

After the modification and the transformation, the electronic device 102 may animate the second rigged 3D model 408 on the display device 110. The second rigged 3D model 408 of the object 108 may be viewed from a plurality of view-points by a user, such as the user 114, via the application interface 212.

In the event that the object 108 changes the first pose 406A to the second pose 406B, the motion-sensing device 106 may capture the second pose 406B of the object 108 and determine the second bone structure information, based on the captured second pose 406B. The electronic device 102 may further receive the second bone structure information from the motion-sensing device 106 in real time or near-real time. Thus, the electronic device 102 may then modify the second set of bone orientations 412A of transformed first hierarchal set of interconnected bones 410 to the third set of bone orientations 412B. The third set of bone orientations 412B may represent the second pose 406B of the object 108. The electronic device 102 may then animate the second rigged 3D model 408 via the application interface 212 on the display device 110, based on the second bone structure information.

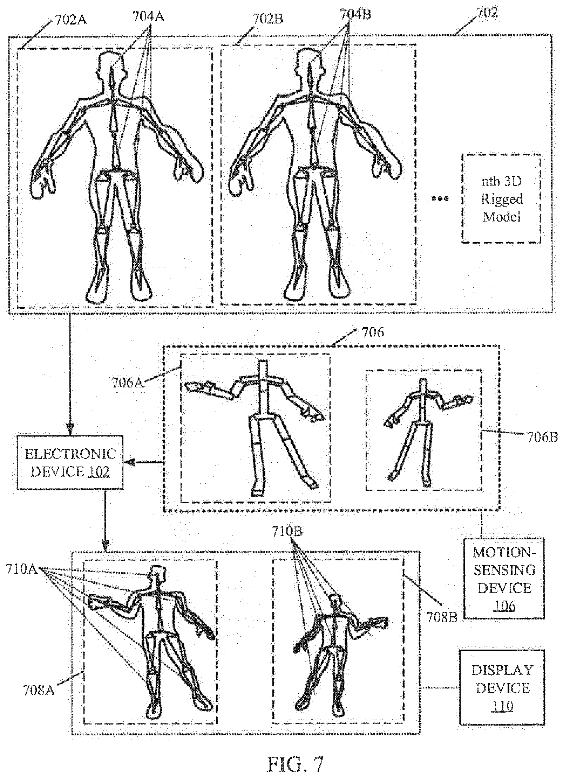

In accordance with an embodiment, the electronic device 102 may receive the bone structure information associated with multiple objects. In such a scenario, the electronic device 102 may animate a plurality of second rigged 3D models for the plurality of objects. An example of the generation of a plurality of second rigged 3D models for the plurality of objects is described in FIG. 7.

FIG. 5 illustrates a second exemplary scenario for implementation of the disclosed apparatus and method for generation of realistic rigged 3D model animation for view point transform, in accordance with an embodiment of the disclosure. FIG. 5 is explained in conjunction with elements from FIGs. 1 to 4. With reference to FIG. 5, there is shown a first location 502 and a second location 504. There is also shown a first human 506 in a first pose 506A and a second pose 506B, a second rigged 3D model 508 in a first pose 508A and a second pose 508B, and a second human 510. There is further shown the electronic device 102, a wireless network 512, and the application interface 212.

In accordance with the second exemplary scenario, the first human 506 may correspond to the object 108. The wireless network 512 may correspond to the communication network 112. The motion-sensing device 106 may be in the 'power-on' state. The first human 506 may be present at the first location 502. The first location 502 may be equipped with the motion-sensing device 106 to capture one or more poses of the first human 506. For instance, the motion-sensing device 106 may capture the first pose 506A of the first human 506 from one view-point. After the capture of the first pose 506A, the motion-sensing device 106 may determine the bone structure information of the first human 506 captured in the first pose 506A. The motion-sensing device 106 may transmit the determined bone structure information of the first human 506 to the electronic device 102, via the wireless network 512.

After receipt of the bone structure information, the electronic device 102 may modify and transform a first rigged 3D model (not shown) stored in the memory 204, to animate the second rigged 3D model 508 in the first pose 508A. An example of the generation of the second rigged 3D model from the first rigged 3D model is described in FIGs. 3A to 3D. The first pose 508A of the second rigged 3D model 508 may be synchronized with the first pose 506A of the first human 506. The electronic device 102 may animate the second rigged 3D model 508 in the first pose 508A, via the application interface 212. The application interface 212 may present a 3D graphical environment, which may allow the second human 510 to view the second rigged 3D model 508 in the first pose 508A from a plurality of view-points. The second human 510 may interact with the application interface 212, to view the plurality of view-points of the second rigged 3D model 508 that is animated to the first pose 508A from the initial rest pose of the first 3D rigged model.

Further, in the event the first human 506 changes the first pose 506A to the second pose 506B, the electronic device 102 may re-animate the second rigged 3D model 508 to the second pose 508B, via the application interface 212. Thus, the electronic device 102 may change the first pose 508A of the second rigged 3D model 508 to the second pose 508B. The second pose 508B of the second rigged 3D model 508 may be synchronized with the second pose 506B of the first human 506. The second human 510 may be able to view the animated second rigged 3D model 508, whose movements are synchronized with the movements of the first human 506. The display of the second rigged 3D model 508 in the first pose 508A and the second pose 508B, via the application interface 212, may create a virtual presence of the first human 506 at the second location 504.

In accordance with an embodiment, the operations of the electronic device 102 may be implemented by the server 104. In accordance with an embodiment, the electronic device 102 may render the application interface 212 on the display device 110, or a plurality of display devices (not shown) associated with a plurality of second users (not shown) present at a plurality of second locations (not shown).

FIG. 6 illustrates a third exemplary scenario for implementation of the disclosed apparatus and method for generation of realistic rigged 3D model animation for view point transform, in accordance with an embodiment of the disclosure. FIG. 6 is explained in conjunction with elements from FIGs. 1 to 5. With reference to FIG. 6, there is shown a human 602 in a first pose 602A and a second pose 602B, a second rigged 3D model 604 in a first pose 604A and a second pose 604B. There is also shown the electronic device 102, the display device 110, the application interface 212, and a wireless network 606, through which the electronic device 102, the motion-sensing device 106, and the display device 110 may communicate with each other.

In accordance with the third exemplary scenario, the human 602 may correspond to the object 108. The wireless network 606 may correspond to the communication network 112. The motion-sensing device 106 may be in the "power-on" state. The third exemplary scenario may represent a gaming environment. The motion-sensing device 106 may capture one or more poses of the human 602. For example, as illustrated, the motion-sensing device 106 may capture the first pose 602A of the human 602 from one view-point. The motion-sensing device 106 may further determine bone structure information, of the human 602 in the first pose 602A, which may be transmitted to the electronic device 102, via the wireless network 606. Thus, based on the received bone structure information, the electronic device 102 may modify and transform a first rigged 3D model in an initial rest pose (pre-stored in the memory 204) to generate the second rigged 3D model 604. The second rigged 3D model 604 may be a transformed first rigged 3D model. The second rigged 3D model 604 may be animated to the first pose 604A, which resembles the captured first pose 602A of the human 602. An example of the generation of second rigged 3D is explained in FIG. 3A to 3D. The animation may be displayed on the display device 110, via the application interface 212.

Further, in the event that the human 602 changes the first pose 602A to the second pose 602B, the motion-sensing device 106 may capture the second pose 602B and determine the bone structure information of the human 602 in the second pose 602B. Thus, the electronic device 102 may re-generate and re-animate the second rigged 3D model 604 from the first pose 604A to the second pose 604B on the display device 110, based on the updated bone structure information received from the motion-sensing device 106. The second pose 604B of the second rigged 3D model 604 may be synchronized with the second pose 602B of the human 602. Thus, the human 602 may change one or more poses to change one or more poses of the second rigged 3D model 604 that may be a gaming character in a game scene. This may enable control of one or more parameters of the gaming character in the gaming environment.

FIG. 7 is a fourth exemplary scenario for implementation of the disclosed apparatus and method for generation of multiple realistic rigged 3D model animations for view point-transform, in accordance with an embodiment of the disclosure. FIG. 7 is explained in conjunction with elements from FIGs. 1 to 6. With reference to FIG. 7, there is shown a plurality of first rigged 3D models 702. The plurality of first rigged 3D models 702 may comprise a first rigged 3D model 702A and another first rigged 3D model 702B. The first rigged 3D model 702A may include a first hierarchal set of interconnected bones 704A and the other first rigged 3D model 702B may include another first hierarchal set of interconnected bones 704B.

There is also shown, a plurality of skeletal structures, such as a second hierarchal set of interconnected bones 706A of a first human and another second hierarchal set of interconnected bones 706B of a second human. There is also shown a plurality of second 3D models 708. The plurality of second 3D models 708 may include a second 3D model 708A and another second 3D model 708B. The second 3D model 708A may include a transformed first hierarchal set of interconnected bones 710A and the other second 3D model 708B may include another transformed first hierarchal set of interconnected bones 710B. There is also shown the electronic device 102, the motion-sensing device 106, and the display device 110.

In accordance with the fourth exemplary scenario, the memory 204 of the electronic device 102 may store the plurality of first rigged 3D models 702. Each of the plurality of first rigged 3D models 702 may comprise the first hierarchal set of interconnected bones 704A or 704B defined in a first set of orientations. Each of the plurality of first rigged 3D models 702 may be in same pose. The motion-sensing device 106 may have captured a pose of each of the first human and the second human from one view-point. Further, the first bone structure information of the first human and the second bone structure information of the second human may have been determined concurrently by the motion-sensing device 106 based on the captured poses of the first object and the second object, respectively. The first bone structure information may comprise bone orientation information and size information of the second hierarchal set of interconnected bones 706A of the first human. The second bone structure information may comprise bone orientation information and size information of the second hierarchal set of interconnected bones 704B of the second human.

The electronic device 102 may modify the first set of bone orientations of the first hierarchal set of interconnected bones 704A of the first rigged 3D model 702A to a second set of bone orientations based on the first bone structure information received from the motion-sensing device 106. The electronic device 102 may further modify the first set of bone orientations of the first hierarchal set of interconnected bones 704B of the first rigged 3D model 702B to a second set of bone orientations based on the second bone structure information received from the motion-sensing device 106. Further, the electronic device 102 may transform the size of the first hierarchal set of interconnected bones 704A of the first rigged 3D model 702A, based on the size information of the second hierarchal set of interconnected bones 706A of the first object. Similarly, the electronic device 102 may transform the size of the first hierarchal set of interconnected bones 704B of the first rigged 3D model 702B based on the size information of the other second hierarchal set of interconnected bones 706B of the second object.

The modified and transformed first rigged 3D model 702A may correspond to the second rigged 3D model 708A, which may resemble the pose of the first human. The modified and transformed first rigged 3D model 702B may correspond to the second rigged 3D model 708B, which may resemble the pose of the second object. After the modification and the transformation, the electronic device 102 may concurrently animate the plurality of second rigged 3D models 708 on the display device 110. The animated plurality of second rigged 3D models 708 may be viewed from a plurality of view-points by a user, such as the user 114. In accordance with an embodiment, the electronic device 102 may animate the plurality of second rigged 3D models 708, via the application interface 212 rendered on the display device 110 (or the display screen 210A).

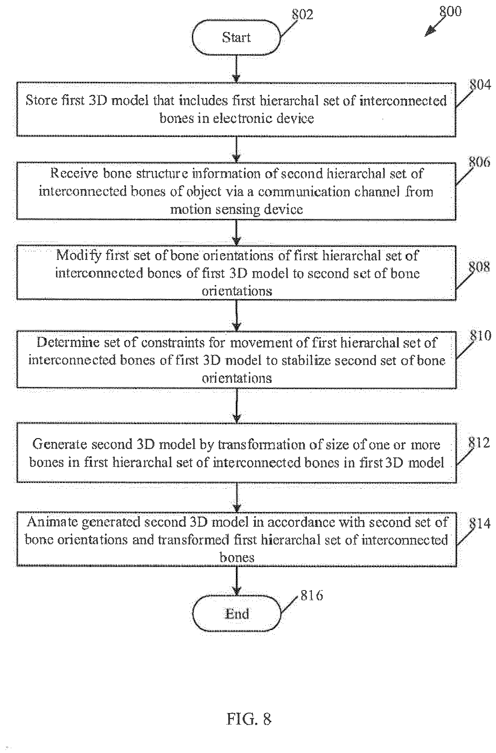

FIG. 8 is a flowchart that illustrates exemplary operations to generate realistic rigged 3D model animation for view point transform, in accordance with an embodiment of the disclosure. With reference to FIG. 8, there is shown a flowchart 800. The flowchart 800 is described in conjunction with FIGs. 1 to 7. The operations, implemented at the electronic device 102, start at 802 and proceed to 804.

At 804, a first 3D model, which may include a first hierarchal set of interconnected bones, may be stored in the electronic device 102. The first 3D model may correspond to a rigged 3D model. The first hierarchal set of interconnected bones in the first 3D model may correspond to a digital rig in the first 3D model. The first hierarchal set of interconnected bones in the first 3D model may be defined in a first set of bone orientations, which may represent an initial rest pose of the first 3D model. Further, the hierarchal set of interconnected bones in the first 3D model may comprise one or more root bones, one or more non-root bones, and one or more end bones. The first 3D model may further comprise surface representation of one or more portions of the first 3D model. The surface representation may correspond to a mesh structure, which is supported by the first hierarchal set of interconnected bones. An example, shown and described in FIG. 3A, depicts the electronic device 102 as it stores the first 3D model 302. An example of each of the one or more root bones, such as the root bone 304A, one or more non-root bones, such as the first non-root bone 304B and the second non-root bone 304C, and one or more end bones, such as the end bone 304D, is also shown.

At 806, bone structure information of a second hierarchal set of interconnected bones of the object 108 is received via a communication channel from the motion-sensing device 106. The bone structure information may be received from the motion-sensing device 106 in a real time, near-real time, or a lag time. The bone structure information may include bone orientation information and size information of the second hierarchal set of interconnected bones of the object 108. An example, shown and described in FIG. 3A, depicts the electronic device 102 as it receives the bone structure information of the second hierarchal set of interconnected bones 308 of the object 108 from the motion-sensing device 106.

At 808, the first set of bone orientations of the first hierarchal set of interconnected bones of the first 3D model may be modified to a second set of bone orientations. The modification of the first set of bone orientations to the second set of bone orientations may be based on the received bone structure information from the motion-sensing device 106. The second set of bone orientations may represent the captured pose of the object 108 by the motion-sensing device 106. For the modification of the first set of bone orientations, the electronic device 102 may compute relative bone orientation for each of one or more bones in the first hierarchal set of interconnected bones of the first 3D model. An example of the modification of the first set of bone orientations to the second set of bone orientations is described in FIG. 3A. Further, an example of the computed relative bone orientation 322 and the computed relative bone orientation 332 is described in FIGs. 3B and 3C.

At 810, a set of constraints may be determined for movement of the first hierarchal set of interconnected bones of the first 3D model to stabilize the second set of bone orientations. The set of constraints may refer to restrictions applied on the movement of the first hierarchal set of interconnected bones. This may be done to make the second set of bone orientations realistic. An example of the set of constraints is described in FIGs. 3A to 3D.

At 812, a second 3D model may be generated by transformation of a size of one or more bones in the first hierarchal set of interconnected bones in the first 3D model. The transformation of the size of the one or more bones in the first hierarchal set of interconnected bones may be based on the received bone structure information. Examples of the second 3D model may include the second 3D model 312 (FIG. 3A), the second 3D model 408 (FIG. 4), and the plurality of second 3D models 708 (FIG. 7). Further, the surface representation of the one or more portions of the first 3D model may be deformed based on the second set of orientations and the transformed first hierarchal set of interconnected bones. An example of the transformation of the bone length 306 of the first non-root bone 304B to the bone length 316 is described in FIG. 3A. Further, an example of the deformation of the surface representation of the one or more portions of the first 3D model 302 is described in FIG. 3A.

At 814, the generated second 3D model may be animated in accordance with the second set of bone orientations and the transformed first hierarchal set of interconnected bones. The animated second 3D model may viewed from a plurality of view-points on the display device 110. The plurality of view-points may also include the one view point of the object 108 captured by the motion-sensing device 106. The animation of the second 3D model may include a synchronization of one or more movements of the first hierarchal set of interconnected bones of the first 3D model with one or more movements of the object 108 tracked by the motion-sensing device 106. An example of the animated second 3D model 312 is described in FIG. 3A. The animated second 3D model may be utilized in animation, creation of virtual presence (FIG. 5), and gaming environments (FIG. 6). The control may pass to the end 816.

In accordance with an embodiment of the disclosure, an apparatus for generation of realistic animation is disclosed. The apparatus, such as the electronic device 102 (FIG. 1), may comprise a memory device (such as the memory 204) and one or more circuits (such as the processor 202, the orientation estimation unit 206, and the model deformation unit 208 (FIG. 2)) coupled to a motion-sensing device (such as the motion-sensing device 106 (FIG. 1)) and a display device (such as the display device 110 (FIG. 1)). The memory 204 may be configured to store a first 3D model (such as the first 3D model 302 (FIG. 3A), the plurality of rigged 3D models 402 (FIG. 4), the plurality of first 3D models 702 (FIG. 7)), which may include a first hierarchal set of interconnected bones, such as (the first hierarchal set of interconnected bones 304, 404A, 404B, 704A, or 704B) defined in a first set of bone orientations. The processor 202 may be configured to receive bone structure information of a second hierarchal set of interconnected bones, (such as the second hierarchal set of interconnected bones 308, 706A, or 706B)) of an object (such as the object 108 in FIG. 1). The orientation estimation unit 206, in conjunction with the model deformation unit 208, may be further configured to modify the first set of bone orientations of the first hierarchal set of interconnected bones of the first 3D model 302 to a second set of bone orientations. The model deformation unit 208 may modify the first set of bone orientations to the second set of bone orientations, based on the received bone structure information from the motion-sensing device 106. The model deformation unit 208 may be further configured to generate second 3D model (such as the second 3D model 312, the second 3D model 408, or the plurality of second 3D models 708)) by a transformation of a size (such as the bone length 306 in FIG. 3A) of one or more bones (such as the first non-root bone 304B in FIG. 3A) in the first hierarchal set of interconnected bones in the first 3D model, based on the received bone structure information. The processor 202 may further animate the generated second 3D model 312 on the display device 110, in accordance with the second set of bone orientations and the transformed first hierarchal set of interconnected bones. The animated the second 3D model 312 may be viewed from a plurality of view-points of the object 108.

In a conventional animated 3D environment, there are several complexities involved in viewing animated rigged 3D model of an object from a plurality of view-points other than the object view-point in which a pose of the object, such as the object 108, is captured. In such cases, the rigged 3D model may be viewed from a single view point. Further, the structure and the relative size of the interconnected bones of the digital rig of the conventional rigged 3D models may not be specific to the structure of the objects whose pose is captured. This discrepancy in the structure and size of the interconnected bones of the digital rig of the rigged 3D models may not be suitable for and may not be desirable for realistic animation. Thus, in order to make a rigged 3D model more realistically resemble an actual object, a rigged 3D model with a digital rig that is structurally similar to the object must be created. This may require creation of multiple rigged 3D models with digital rigs of different size for multiple objects, resulting in an increase in overhead cost and time. Consequently, animation of such rigged 3D models that exhibits a discrepancy in the structure and size of the interconnected bones of the digital rig may also generate unrealistic animation.

The various embodiments of the disclosed apparatus, such as the electronic device 102, comprises one or more circuits, such the processor 202, the orientation estimation unit 206, and the model deformation unit 208, which may modify a first set of orientations of a rigged 3D model to a second set of orientations based on structural orientation information received from a motion-sensing device. Thus, the disclosed apparatus may modify a plurality of rigged 3D models of the same shape, based on structural orientation information of a plurality of objects. Further, the disclosed apparatus may transform the size of one or more bones in hierarchal set of interconnected bones in rigged 3D model, based on structural orientation information. The transformation of the size of one or more bones in hierarchal set of interconnected bones in rigged 3D may automatically generate a rigged 3D model, which may more realistically resemble the anatomical skeletal structure of the actual object, whose movement may be tracked by the motion-sensing device 106, for example, as compare to the conventional animated 3D environment. For instance, structure and the relative size of the interconnected bones of the digital rig in the generated rigged 3D model, such as the second rigged 3D model, may be similar to that of the structure and the relative size of the interconnected bones of the object. Thus, the orientation estimation unit 206 and the model deformation unit 208, enables an apparatus, such as the electronic device 102, to generate and display realistic animation. The apparatus, such as the electronic device 102, is able to generate realistic animation by use of the realistic 3D rigged models, such as the generated second 3D rigged model, as a result of modification of bone orienatin and transformation of bone size, thereby providing a specific improvement in 3D animation technology.

Various embodiments of the disclosure may provide a non-transitory, computer-readable medium and/or storage medium, and/or a non-transitory machine readable medium and/or storage medium stored thereon, a machine code and/or a computer program with at least one code section executable by a machine and/or a computer that comprises one or more circuits communicatively coupled to a motion-sensing device and a display device. The at least one code section may be executable by the machine and/or the computer to perform the steps that comprise the storage of a first 3D model that includes a first hierarchal set of interconnected bones defined in a first set of bone orientations. Bone structure information of a second hierarchal set of interconnected bones of an object may be received from a motion-sensing device. The first set of bone orientations of the first hierarchal set of interconnected bones of the first 3D model may be modified to a second set of bone orientations. The modification of the first set of bone orientations to the second set of bone orientations may be based on the received bone structure information from the motion-sensing device. The generated second 3D model may be animated in accordance with the second set of bone orientations and the transformed first hierarchal set of interconnected bones. Further, the animated second 3D model may be viewed from a plurality of view-points on the display device.

In accordance with an exemplary aspect of the disclosure, the electronic device 102 may be a virtual-reality based device. Thus, all the operations executed by the electronic device 102 as described in the present disclosure, may also be executed by the virtual-reality based device. For example, the virtual-reality based device may present a second 3D model, such as the second 3D model 312, of a first human to a second human. The second 3D model 312 may imitate one or more poses of the first human. The second 3D model 312 may also be textured with image data to resemble the first human. Thus, the display of the second 3D model 312 by the virtual reality based device creates a virtual presence of the first human in a remote location, for the second human. An example of the electronic device 102 implemented as the virtual-reality based device is provided, for example, in FIG. 5.

In accordance with another exemplary aspect of the disclosure, the electronic device 102 may be a gaming device. Thus, all the operations executed by the electronic device 102 as described in the present disclosure, may also be executed by the gaming device. For example, the gaming device may present a gaming character, such as the second 3D model 312, in a gaming environment to a player. The gaming device may further cause the gaming character to imitate one or more poses of the player. This may enable the player to control movement of the gaming character in the gaming environment. For example, in the event the player starts to run, the gaming character may imitate the running pose of the player. The gaming environment may also be a multipayer game. In such a case, the gaming device may present a plurality of gaming chararaters, each imimating one of the multiple players in the multipayer game. An example of the electronic device 102 implemented as the gaming device is described, for example, in FIG. 6.

In accordance with yet another exemplary aspect of the disclosure, the electronic device 102 may be a 3D model-based conferencing system. Thus, all the operations executed by the electronic device 102 as described in the present disclosure, may also be executed by the 3D model-based conferencing system. Usually, the conventional video conferencing systems require a high network bandwidth for a seamless transmission of video. In an event that the requirement of network bandwidth is not fulfilled, video conferencing is hindered. The 3D model based conferencing device, such as the electronic device 102, enables videoless conferencing that may not require a high network bandwidth for video transmission. For example, the 3D model based conferencing device may track one or more poses of a first person involved in conferencing. The 3D model based conferencing device may then animate a rigged 3D model, such as the second 3D model 312, based on the tracked one or more poses of the first person. The animated rigged 3D model may be presented along with recorded audio of the first person to a second person involved in the conferencing. The 3D model based conferencing device may further present another animated rigged 3D model to the first person, that imitates one or more poses of the second person. Thus, the 3D model based conferencing device enables the first person and the second person to participate in conferencing. An example of the electronic device 102 that creates a virual presence, may also be realized as the 3D model-based conferencing system, for example, as described in FIG. 5.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted to carry out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

The present disclosure may also be embedded in a computer program product, which comprises all the features that enable the implementation of the methods described herein, and which when loaded in a computer system is able to carry out these methods. Computer program, in the present context, means any expression, in any language, code or notation, of a set of instructions intended to cause a system with information processing capability to perform a particular function either directly, or after either or both of the following: a) conversion to another language, code or notation; b) reproduction in a different material form.

While the present disclosure is described with reference to certain embodiments, it will be understood by those skilled in the art that various changes may be made and equivalents may be substituted without departure from the scope of the present disclosure. In addition, many modifications may be made to adapt a particular situation or material to the teachings of the present disclosure without departure from its scope. Therefore, it is intended that the present disclosure not be limited to the particular embodiment disclosed, but that the present disclosure will include all embodiments that fall within the scope of the appended claims.

**Claims**

1. An apparatus to generate realistic animation, comprising:

   a memory device configured to store a first 3D model that includes a first hierarchal set of interconnected bones defined in a first set of bone orientations; and
   one or more circuits communicatively coupled to a motion-sensing device and a display device, said one or more circuits are configured to:

   receive bone structure information of a second hierarchal set of interconnected bones of an object via a communication channel from said motion-sensing device;
   modify said first set of bone orientations of said first hierarchal set of interconnected bones of said first 3D model to a second set of bone orientations based on said received bone structure information from said motion-sensing device;
   generate a second 3D model by transformation of a size of one or more bones in said first hierarchal set of interconnected bones in said first 3D model based on said received bone structure information; and
   animate said generated second 3D model in accordance with said second set of bone orientations and said transformed first hierarchal set of interconnected bones.

2. The apparatus according to claim 1, wherein said first 3D model corresponds to a rigged 3D model, and wherein said first hierarchal set of interconnected bones corresponds to a digital rig in said rigged 3D model.

3. The apparatus according to claim 1, wherein said object corresponds to a human, an animal, or a robot that mimics natural body movements of a real human or animal.

4. The apparatus according to claim 1, wherein said first 3D model further includes surface representation of one or more portions of said first 3D model, wherein said surface representation corresponds to a mesh structure.

5. The apparatus according to claim 4, wherein the one or more circuits are further configured to deform said surface representation of said one or more portions of said first 3D model based on said second set of orientations and said transformed first hierarchal set of interconnected bones.

6. The apparatus according to claim 1, wherein said bone structure information comprises bone orientation information and size information, of said second hierarchal set of interconnected bones of said object, associated with a view point.

7. The apparatus according to claim 6, wherein said bone structure information is received in a real time, near real time, or a lag time from said motion-sensing device.

8. The apparatus according to claim 1, wherein said first hierarchal set of interconnected bones of said first 3D model comprises one or more root bones, one or more non-root bones, and one or more end bones.

9. The apparatus according to claim 1, wherein said one or more circuits are further configured to compute a relative bone orientation of a root bone in said first hierarchal set of interconnected bones with respect to a corresponding root bone in said second hierarchal set of interconnected bones, based on said bone structure information of said corresponding root bone.

10. The apparatus according to claim 8, wherein said one or more circuits are further configured to compute a relative bone orientation of a non-root bone in said first hierarchal set of interconnected bones with respect to a corresponding non-root bone in said second hierarchal set of interconnected bones, based on said bone structure information of said corresponding non-root bone and a corresponding parent bone of a parent bone of said non-root bone in said first hierarchal set of interconnected bones.

11. The apparatus according to claim 8, wherein said one or more circuits are further configured to compute a relative bone orientation of an end bone in said first hierarchal set of interconnected bones with respect to a corresponding end bone in said second hierarchal set of interconnected bones, based on a joint position of said end bone in said first hierarchal set of interconnected bones in said first 3D model.

12. The apparatus according to claim 1, wherein said one or more circuits are further configured to determine a set of constraints for movement of said first hierarchal set of interconnected bones of said first 3D model to stabilize said second set of bone orientations.

13. The apparatus according to claim 1, wherein said one or more circuits are further configured to receive said bone structure information of a plurality of objects from said motion-sensing device in a real time, near real time, or a lag time.

14. The apparatus according to claim 13, wherein said one or more circuits are further configured to generate a plurality of second 3D models based on said first 3D model and said received bone structure information of said plurality of objects from said motion-sensing device.

15. The apparatus according to claim 1, wherein said one or more circuits are further configured to synchronize one or more movements of said first hierarchal set of interconnected bones of said first 3D model, rendered on said display device in a real time, near real time, or a lag time, with one or more movements of said object tracked by said motion-sensing device, by said generation of said second 3D model.

FIG. 1

COMMUNICATION
NETWORK
112

102

PROCESSOR 202

NETWORK
INTERFACE
214

MEMORY 204

ORIENTATION ESTIMATION
UNIT 206

MODEL DEFORMATION UNIT
208

I/O DEVICE 210

DISPLAY SCREEN
210A

APPLICATION
INTERFACE 212

FIG. 2

MEMORY
204

MOTION-
SENSING
DEVICE
106

302

304

304A

306

304B

304D

304C

308

310C

310A

310B

310D

312

314

314C

314A

316

314B

314D

FIG. 3A

FIG. 3B

FIG. 3C

FIG. 3D

FIG. 4

FIG. 5

FIG. 6

FIG. 7

Start

Store first 3D model that includes first hierarchal set of interconnected bones in electronic device

Receive bone structure information of second hierarchal set of interconnected bones of object via a communication channel from motion sensing device

Modify first set of bone orientations of first hierarchal set of interconnected bones of first 3D model to second set of bone orientations

Determine set of constraints for movement of first hierarchal set of interconnected bones of first 3D model to stabilize second set of bone orientations

Generate second 3D model by transformation of size of one or more bones in first hierarchal set of interconnected bones in first 3D model

Animate generated second 3D model in accordance with second set of bone orientations and transformed first hierarchal set of interconnected bones

End

FIG. 8

Europäisches
Patentamt

European
Patent Office

Office européen
des brevets

# EUROPEAN SEARCH REPORT

Application Number

EP 18 15 4921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/171738 A1 (FREEMAN SETH [US]) 16 June 2016 (2016-06-16) * abstract * * * paragraph [0004] * * paragraph [0013] - paragraph [0014] * ----- | 1-15 | INV. G06T13/40 |
| A | US 2016/358365 A1 (SUMNER ROBERT WALKER [CH] ET AL) 8 December 2016 (2016-12-08) * abstract * * ----- | 1-15 | |
| A | US 2010/277470 A1 (MARGOLIS JEFFREY [US]) 4 November 2010 (2010-11-04) * abstract * * ----- | 1-15 | |

TECHNICAL FIELDS
SEARCHED      (IPC)

G06T

The present search report has been drawn up for all claims

| Place of search | Date of completion of the search | Examiner |
|---|---|---|
| Berlin | 29 May 2018 | González Arias, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 18 15 4921

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2018

| Patent document cited in search report | | | Publication date | Patent family member(s) | | Publication date |
|---|---|---|---|---|---|---|
| US 2016171738 | A1 | | 16-06-2016 | NONE | | |
| US 2016358365 | A1 | | 08-12-2016 | NONE | | |
| US 2010277470 | A1 | | 04-11-2010 | BR | PI1015282 A2 | 20-02-2018 |
| | | | | CA | 2757173 A1 | 04-11-2010 |
| | | | | CN | 102413885 A | 11-04-2012 |
| | | | | EP | 2424631 A2 | 07-03-2012 |
| | | | | IL | 215294 A | 31-05-2016 |
| | | | | JP | 5739872 B2 | 24-06-2015 |
| | | | | JP | 2012525643 A | 22-10-2012 |
| | | | | KR | 20120020106 A | 07-03-2012 |
| | | | | RU | 2011144152 A | 10-05-2013 |
| | | | | US | 2010277470 A1 | 04-11-2010 |
| | | | | US | 2012127176 A1 | 24-05-2012 |
| | | | | WO | 2010126816 A2 | 04-11-2010 |

EPO FORM P0459

For more details about this annex : see Official Journal of the European Patent Office, No. 12/82